# EUROPÄISCHE PATENTSCHRIFT

(11) **EP 2 936 245 B1**
(45) Veröffentlichungstag und Bekanntmachung des Hinweises auf die Patenterteilung: **18.04.2018**
(21) Anmeldenummer: 13801501.1
(22) Anmeldetag: 26.11.2013
(51) Int. Cl.: H01S 3/00, G02F 1/35

(54) **EINRICHTUNG ZUR FREQUENZUMWANDLUNG EINES MIT EINER ERSTEN FREQUENZ VON EINER LASERSTRAHLQUELLE ERZEUGTEN LASERSTRAHLS**
DEVICE FOR FREQUENCY CONVERSION OF A LASER BEAM GENERATED WITH A FIRST FREQUENCY BY A LASER BEAM SOURCE
SYSTÈME DE CONVERSION DE FRÉQUENCE D'UN RAYON LASER GÉNÉRÉ À UNE PREMIÈRE FRÉQUENCE D'UNE SOURCE DE RAYONNEMENT LASER

(30) Priorität: 18.12.2012 DE 102012223527
(43) Veröffentlichungstag der Anmeldung: 28.10.2015
(73) Patentinhaber: Rofin Sinar Laser GmbH, 22113 Hamburg (DE)
(72) Erfinder: LEHMANN, Uwe, 82194 Gröbenzell (DE); REISER, Axel, 85229 Markt Indersdorf (DE)
(74) Vertreter: Schlögl, Markus
(86) Internationale Anmeldenummer: PCT/EP2013/074729
(87) Internationale Veröffentlichungsnummer: WO 2014/095264

(56) Entgegenhaltungen:
- WO-A1-2011/120777
- US-A1- 2003 043 452
- US-A1- 2006 250 677

## Beschreibung

Die Erfindung bezieht sich auf eine Einrichtung zur Frequenzumwandlung eines mit einer ersten Frequenz (Grundfrequenz) von einer Laserstrahlquelle erzeugten Laserstrahls, bei der durch Hintereinanderschaltung zweier optisch nichtlinearer Kristalle aus dem mit der ersten Frequenz vorliegenden Laserstrahl ein Laserstrahl erzeugt werden kann, dessen Frequenz insbesondere das Dreifache der Grundfrequenz beträgt (Frequenzverdreifachung, THG, Third Harmonic Generation). Auf diese Weise kann aus einem von einem Laser erzeugten infraroten Laserstrahl ein Laserstrahl erzeugt werden, der im UV-Bereich liegt. Zum Erzeugen eines Laserstrahls mit dreifacher Frequenz ist es erforderlich, dass sich der im zweiten nichtlinearen optischen Kristall ausbreitende, mit der Grundfrequenz schwingende Laserstrahl mit dem im ersten nichtlinearen optischen Kristall erzeugten, und mit der doppelten Grundfrequenz schwingenden Laserstrahl überlagert. Die zum Erzeugen der dritten höherer Harmonischen notwendige nichtlineare Wechselwirkung der Strahlungsfelder mit dem Kristall findet nur bei entsprechend hoher Intensität der sich im Kristall überlagernden Laserstrahlen statt, die in der Regel nur mit sehr kleinen Strahlquerschnitten erzielt werden kann.

Während bei der Erzeugung der zweiten Harmonischen (SHG, Second Harmonic Generation) eine sogenannte nichtkritische Phasenanpassung möglich ist, bei der sich der mit der ersten Frequenz ausbreitende Laserstrahl und der frequenzverdoppelte Laserstrahl kollinear zueinander ausbreiten und sich auf der gesamten Länge des Kristalls überlagern, d.h. keinen sogenannten "walk-off" zeigen, ist eine solche nichtkritische Phasenanpassung bei der Erzeugung der dritten Harmonischen bzw. Frequenzverdreifachung mit den für praktische Anwendungen zur Erzeugung hoher Ausgangsleistungen verfügbaren nichtlinearen Kristallen nicht möglich, so dass ein "walk-off" der zur Erzeugung der dritten Harmonischen im zweiten nichtlinearen optischen Kristall sich ausbreitenden Laserstrahlen unvermeidlich ist.

Um dennoch eine hohe Konversionseffizienz im zweiten optisch nichtlinearen Kristall zu erreichen, wird in der US 2003/0043452 A1 vorgeschlagen, zwischen dem ersten optisch nichtlinearen Kristall und dem zweiten optisch nichtlinearen Kristall einen doppelbrechenden Kristall anzuordnen, der zu einer externen Strahlseparation zwischen den beiden Laserstrahlen führt, der dem internen "walk-off" im zweiten optisch nichtlinearen Kristall entgegengesetzt gerichtet ist.

Eine alternative Vorgehensweise zur Kompensation des "walk-off" ist beispielsweise aus der US 5,047,668 bekannt, bei der im ersten optisch nichtlinearen Kristall eine kritische Phasenanpassung erfolgt, und der hierdurch verursachte "walk-off" zur "walk-off"-Kompensation im zweiten optisch nichtlinearen Kristall genutzt wird.

Aus der US 2004/0240491 A1 ist es bekannt, zusätzlich eine Kompensation der Laufzeitdifferenz dadurch zu erreichen, dass zwischen dem ersten und zweiten optisch nichtlinearen Kristall zwei relativ zueinander senkrecht zur Ausbreitungsrichtung des ordentlichen Strahls verschiebbar angeordnete doppelbrechende Keilprismen angeordnet werden.

Bei diesen bekannten Anordnungen treffen erster und zweiter Laserstrahl stets senkrecht und voneinander beabstandet auf die Eintrittsfläche des zweiten optisch nichtlinearen Kristalls auf und es findet zwischen dem ersten und zweiten Laserstrahl eine kritische kollineare Phasenanpassung statt (Wellenvektoren sind kollinear, Poynting-Vektoren sind nicht kollinear) .

In der US 2013/0028277 A1 wird zur Kompensation des "walk-off" vorgeschlagen, ersten und zweiten Laserstrahl vor dem Eintritt in den zweiten nichtlinearen Kristall zu separieren, so dass sich diese unter einem von Null verschiedenen Winkel zueinander ausbreiten und voneinander beabstandet auf den zweiten nichtlinearen Kristall auftreffen.

Aus der US 7,292,387 B2 ist eine Einrichtung zur Frequenzverdreifachung bekannt, bei der erster und zweiter Laserstrahl schräg mit unterschiedlichen Einfallswinkeln an derselben Stelle auf die Eintrittsfläche des zweiten optisch nichtlinearen Kristalls auftreffen, wobei innerhalb des Kristalls eine nichtkollineare Phasenanpassung erfolgt, um einen "walk-off" zwischen den Laserstrahlen zu minimieren.

Der Erfindung liegt nun die Aufgabe zu Grunde, eine Einrichtung zur Frequenzumwandlung eines mit einer ersten Frequenz von einer Laserstrahlquelle erzeugten Laserstrahls anzugeben, bei der durch Hintereinanderschaltung zweier optisch nichtlinearer Kristalle aus dem mit der ersten Frequenz vorliegenden Laserstrahl ein Laserstrahl erzeugt werden kann, dessen Frequenz insbesondere das Dreifache der ersten Frequenz beträgt, und mit der es möglich ist, einen "walk-off" im zweiten optisch nichtlinearen Kristall zu kompensieren.

Die genannte Aufgabe wird gelöst mit einer Einrichtung mit den Merkmalen des Patentanspruches 1. Gemäß diesen Merkmalen umfasst die Einrichtung
a) einen optisch nichtlinearen ersten Kristall zum Erzeugen eines zweiten Laserstrahls mit einer von der ersten Frequenz verschiedenen zweiten Frequenz, der sich nach Verlassen des optisch nichtlinearen ersten Kristalls parallel zum ersten Laserstrahl ausbreitet,
b) einen optisch nichtlinearen zweiten Kristall, der aus dem ersten und zweiten Laserstrahl zumindest einen dritten Laserstrahl mit einer dritten, von der ersten Frequenz und der zweiten Frequenz verschiedenen dritten Frequenz erzeugt, und
c) eine optische Ablenkeinrichtung zur Beeinflussung der relativen Strahllage zwischen erstem und zweitem Laserstrahl derart, dass sich
d) erster und zweiter Laserstrahl vor dem Eintritt in den zweiten Kristall unter einem von Null verschiedenen Winkel zueinander ausbreiten und
e) voneinander separiert an einer Eintrittsfläche des zweiten Kristalls eintreten und sich innerhalb des zweiten Kristalles bei zugleich kollinearer Phasenanpassung schneiden, wobei
f) die Eintrittsfläche des zweiten Kristalls unter einem von 0° verschiedenen Keilwinkel zu zwei zueinander parallelen, einander gegenüber liegenden Seitenflächen des zweiten Kristalls geneigt ist.

Da sich erster und zweiter Laserstrahl vor dem Eintritt in den zweiten Kristall unter einem von Null verschiedenen Winkel, d.h. schräg zueinander ausbreiten, ist es möglich, den Überlapp zwischen dem ersten und dem zweiten Laserstrahl zu optimieren und somit die Leistung der Einrichtung auf einfache Weise durch Variation des Abstandes zwischen der optischen Ablenkeinrichtung und dem zweiten Kristall zu optimieren. Eine solche einfache Optimierung ist bei den beispielsweise aus der US 2003/0043452 A1 und der US 2004/0240491 A1 bekannten Einrichtungen nicht möglich. Hier ist stets ein Austausch von optischen Komponenten, beispielweise bei der aus der US 2003/0043452 A1 Anordnung ein Austausch des zwischen dem ersten und zweiten optisch nichtlinearen Kristall angeordneten doppelbrechenden Element erforderlich, deren Auswahl begrenzt ist.

Ein weiterer Vorteil der erfindungsgemäßen Anordnung besteht darin, dass dieselbe optische Ablenkeinrichtung für unterschiedlich lange erste und zweite optisch nichtlineare Kristalle verwendet werden kann, da durch eine Variation ihres Abstandes zum zweiten optisch nichtlinearen Kristall und der damit verbundenen Strahlseparation an dessen Eintrittsfläche stets eine Optimierung des Überlapps zwischen dem ersten und zweiten Laserstrahl im zweiten Kristall möglich ist.

Da außerdem die Eintrittsfläche des zweiten Kristalls unter einem von 0° verschiedenen Keilwinkel zu den Seitenflächen des zweiten Kristalls orientiert ist, ist es in einer vorteilhaften Ausgestaltung der Erfindung durch an die optischen Eigenschaften des zweiten Kristalls angepasste Einstellung des Keilwinkels und des Ausbreitungswinkels zwischen dem ersten und zweiten Laserstrahl vor dem zweiten Kristall und durch Einstellung der Orientierung der Seitenflächen des zweiten Kristalls relativ zur Ausbreitungsrichtung des ersten Laserstrahls innerhalb des ersten Kristalls möglich, sowohl eine kollineare Phasenanpassung als auch eine parallel zu den Seitenflächen des zweiten Kristalls orientierte Ausbreitung des ersten Laserstrahls innerhalb des zweiten Kristalls einzustellen. Der dritte Laserstrahl, dessen Frequenz in den meisten Anwendungsfällen im UV-Bereich liegt, verursacht im Laufe des Betriebs innerhalb des zweiten Kristalls und an der Austrittsstelle eine Degradation. Wenn sich der erste und damit bei kollinearer Phasenanpassung dementsprechend auch der dritte Laserstrahl parallel zu den Seitenflächen des zweiten Kristalls ausbreiten, kann durch ein Versetzen des zweiten Kristalls senkrecht zur Ausbreitungsrichtung des ersten Laserstrahls nahezu das gesamte Volumen des zweiten Kristalls bis auf seitliche Randbereiche, deren Breite etwa dem Abstand zwischen dem ersten und zweiten Laserstrahles beim Eintritt in den zweiten Kristall entspricht, für die Frequenzkonversion ausgenutzt werden. Auf diese Weise ist die Nutzungsdauer des zweiten Kristalls signifikant erhöht. Darüber hinaus können auch kleinere und damit kostengünstigere zweite Kristalle verwendet werden.

Ein besonders einfacher Aufbau wird ermöglicht, wenn die optische Ablenkeinrichtung ein zwischen dem ersten und zweiten nichtlinearen Kristall im Strahlengang des ersten und zweiten Laserstrahls angeordnetes optisches, vorzugsweise dispersives optisches Element ist.

In einer bevorzugten Ausführungsform wird als optisches Element ein optisch isotropes Element verwendet.

Als optisches Element kann in einer weiteren bevorzugten Ausführungsform ein Beugungsgitter vorgesehen sein, bei dem die Ablenkung durch Beugung erfolgt.

Zur weiteren Erläuterung der Erfindung wird auf die in den Figuren dargestellten Ausführungsbeispiele verwiesen. Es zeigen:

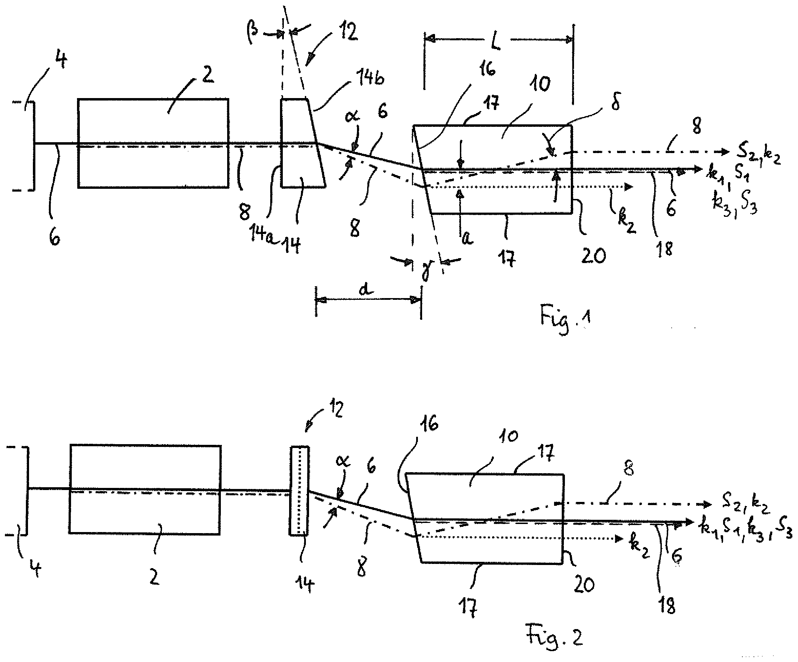

Figuren 1 bis 5 alternative Ausführungsformen einer Einrichtung gemäß der Erfindung jeweils in einer Prinzipdarstellung.

Gemäß Figur 1 enthält die Einrichtung einen optisch nichtlinearen ersten Kristall 2, in dem aus einem sich in ihm ausbreitenden, von einer Laserstrahlquelle 4 mit einer ersten Frequenz ω₁ erzeugten ersten vorzugsweise linear polarisierten Laserstrahl 6 ein zweiter linear polarisierter Laserstrahl 8 erzeugt wird, der eine gegenüber der ersten Frequenz ω₁ verdoppelte zweite Frequenz ω₂=2ω₁ aufweist (SHG) und senkrecht zum ersten Laserstrahl 8 polarisiert ist. Bei der Laserstrahlquelle 4 handelt es beispielsweise um einen diodengepumpten Nd:YAG-Festkörperlaser, der einen ersten Laserstrahl 6 mit der Wellenlänge λ₁=1064nm erzeugt.

Im dargestellten Ausführungsbeispiel liegt bei der Erzeugung der zweiten Harmonischen eine sogenannte nichtkritische kollineare Phasenanpassung vor, bei der sich der ordentliche erste Laserstrahl 6 und der außerordentliche zweite Laserstrahl 8 innerhalb des ersten Kristalls 2 überlagern (Poynting-Vektoren sind kollinear) und auch die Wellenvektoren k₁, k₂ des ersten bzw. zweiten Laserstrahles 6, 8 zueinander kollinear sind.

Eine solche nichtkritische kollineare Phasenanpassung ist beispielsweise bei der Frequenzverdopplung eines ersten Laserstrahls mit der Wellenlänge λ₁=1064nm in einem LBO-Kristall bei einer Kristalltemperatur von etwa 150°C möglich.

Dem ersten Kristall 2 ist ein optisch nichtlinearer zweiter Kristall 10 nachgeordnet, in den die aus dem ersten Kristall 2 austretenden ersten und zweiten Laserstrahlen 6 und 8 eintreten und einen dritten Laserstrahl 18 mit einer dritten Frequenz ω₃ erzeugen. Als zweiter Kristall 10 ist im Beispiel ein LBO-Kristall mit einer Kristalltemperatur von etwa 60° vorgesehen, mit dem eine dritte Harmonische erzeugt wird, deren Frequenz ω₃ das Dreifache der ersten Frequenz ω₁ beträgt (ω₃=3ω₁).

Zwischen dem ersten Kristall 2 und dem zweiten Kristall 10 ist im Strahlengang des ersten und zweiten Laserstrahls 6 bzw. 8 eine optische Ablenkeinrichtung 12 angeordnet, mit der die relative Strahllage zwischen erstem und zweitem Laserstrahl 6 bzw. 8 beeinflusst bzw. geändert wird, so dass sich erster und zweiter Laserstrahl 6 bzw. 8 vor dem Eintritt in den zweiten Kristall 10 unter einem von Null verschiedenen Winkel α zueinander ausbreiten und voneinander um den Abstand a beabstandet und unter einem von 90° verschiedenen Winkel auf die der optischen Ablenkeinrichtung 12 zugewandte Eintrittsfläche 16 des zweiten Kristalls 10 auftreffen. Die Eintrittsfläche 16 des zweiten Kristalls 10 ist außerdem um einen von 0° verschiedenen Keilwinkel γ gegen einander gegenüberliegende, parallel zueinander und senkrecht zur Zeichenebene orientierte Seitenflächen 17 des zweiten Kristalls 10 geneigt, um auf diese Weise eine parallel zu diesen Seitenflächen 17 orientierte Ausbreitung des ersten Laserstrahls innerhalb des zweiten Kristalls 10 zu ermöglichen.

Im Ausführungsbeispiel besteht die Ablenkeinrichtung 12 aus einem dispersiven optischen Element 14 mit zueinander schräg orientierten Eintritts- und Austrittsflächen 14a, b, im dargestellten Beispiel ein Keilprisma mit einer senkrecht zur Ausbreitungsrichtung des aus dem ersten Kristall 2 austretenden ersten und zweiten Laserstrahles 6 bzw. 8 Eintrittsfläche 14a und einer mit einem Keilwinkel β dazu geneigt orientierten Austrittsfläche 14b. Aufgrund der voneinander verschiedenen Brechungsindizes für den ersten und zweiten Laserstrahl 6 bzw. 8 werden erster und zweiter Laserstrahl 6 bzw. 8 unterschiedlich gebrochen bzw. abgelenkt. Im Ausführungsbeispiel ist das dispersive optische Element 14 optisch isotrop, so dass die Strahlablenkung ausschließlich durch Brechung an Grenzflächen erfolgt, auf die die Laserstrahlen 6, 8 unter einem von Null verschiedenen Einfallswinkel (Winkel zwischen der Flächennormale und den Laserstrahlen) auftreffen.

Die durch das optische Element 14 erzeugte Auftrennung des ersten und zweiten Laserstrahls 6 bzw. 8 um den Winkel α und der Keilwinkel γ der Eintrittsfläche 16 des zweiten Kristalls 10 sind unter Berücksichtigung der für die beiden Laserstrahlen 6, 8 unterschiedlichen Brechungsindizes des zweiten Kristalls 10 so aufeinander abgestimmt, dass der Wellenvektor k₁ des ersten Laserstrahls 6 kollinear zum Wellenvektor k₂ des zweiten Laserstrahls 8 ist (kollineare Phasenanpassung). Innerhalb des zweiten Kristalls 10 sind außerdem der Poynting-Vektor S₁ und der Wellenvektor k₁ des (ordentlichen) ersten Laserstrahls 6 ebenso wie im ersten Kristall 2 kollinear. Eine solche Kollinearität ist jedoch für den zweiten Laserstrahl 8 nicht möglich. Dies hat zur Folge, dass sich erster und zweiter Laserstrahl 6, 8 nicht mehr parallel zueinander ausbreiten, d.h. dass der Poynting-Vektor S₂ des zweiten Laserstrahls 8 schräg unter einem "walk-off"-Winkel δ zum Poynting-Vektor S₁ des ersten Laserstrahls 6 orientiert ist.

Zusätzlich ist die Strecke d zwischen dem optischen Element 14 und dem zweiten Kristall 10 derart bemessen, dass der Abstand bzw. die räumliche Strahlseparation a zwischen dem ersten und zweiten Laserstrahl 6, 8 an der Eintrittsfläche 16 bei dem gegebenen "walk-off"-Winkel δ dazu führt, dass sich erster und zweiter Laserstrahl 6 bzw. 8 innerhalb des zweiten Kristall 10, vorzugsweise in der Mitte zwischen der Eintrittsfläche 16 und der Austrittsfläche 20, d.h. etwa nach der Hälfte der vom ersten Laserstrahl 6 innerhalb des zweiten Kristalls 10 zurückgelegten Wegstrecke schneiden.

Innerhalb des zweiten Kristalls 10 wird nun durch nichtlineare optische Prozesse ein dritter Laserstrahl 18 mit einer dritten Frequenz ω₃ erzeugt, die das Dreifache der ersten Frequenz ω₁ beträgt (ω₃=3ω₁), und dessen Poynting-Vektor S₃ und Wellenvektor k₃ kollinear zum Poynting-Vektor S₁ und Wellenvektor k₁ des (ordentlichen) ersten Laserstrahls 6 sind.

Im Beispiel der Fig. 1 ist das dispersive optische Element 14 optisch isotrop. Alternativ hierzu kann auch in diesem Ausführungsbeispiel, bei dem im ersten Kristall 2 eine nichtkritische Phasenanpassung erfolgt, zum Erzeugen einer schräg zueinander orientierten Ausbreitung des ersten und zweiten Laserstrahls 6, 8 anstelle eines optisch isotropen dispersiven optischen Elementes ein optisch anisotropes, doppelbrechendes optisches Element verwendet werden.

Im Ausführungsbeispiel der Fig. 2 ist als dispersives optisches Element 14 ein Beugungsgitter vorgesehen, bei dem eine Separation von erstem und zweitem Laserstrahl 6, 8 durch Beugung erfolgt. Auch in diesem Ausführungsbeispiel erfolgt im ersten Kristall eine nichtkritische Phasenanpassung, so dass sich die Laserstrahlen 6, 8 erst nach dem Beugungsgitter in unterschiedliche Richtungen ausbreiten (Winkelseparation a), so dass sie sich voneinander trennen und dementsprechend beabstandet und unter voneinander verschiedenen Einfallswinkeln auf die Eintrittsfläche 16 auftreffen.

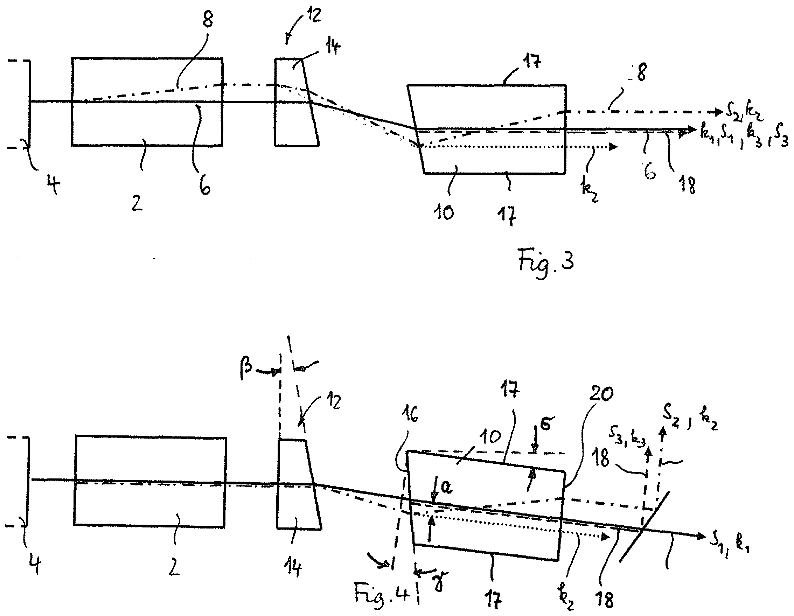

Im Ausführungsbeispiel der Fig. 3 ist das optische Element 14 ein optisch anisotropes, doppelbrechendes optisches Element, bei dem die unterschiedlichen Ausbreitungsrichtungen von erstem und zweitem Laserstrahl 6 bzw. 8 sowohl durch Doppelbrechung als auch durch eine durch Dispersion verursachte unterschiedliche Brechung an einer schräg zur Ausbreitungsrichtung der Laserstrahlen orientierten Grenzfläche hervorgerufen werden kann. Im dargestellten Ausführungsbeispiel erfolgt im ersten Kristall 2 eine kritische kollineare Phasenanpassung mit einem "walk-off" des zweiten Laserstrahls 8, so dass sich erster und zweiter Laserstrahl zwischen dem ersten Kristall 2 und dem optischen Element 14 voneinander beabstandet und parallel zueinander ausbreiten. Bei dem optischen Element 14 handelt es sich um ein Keilprisma mit planer Eintrittsfläche, das den außerordentlichen zweiten Laserstrahl 8 ablenkt, wobei erster und zweiter Laserstrahl 6, 8 beim Austritt aus dem optischen Element 14 eine unterschiedliche Brechung erfahren. Grundsätzlich kann auch bei einer im ersten Kristall 2 erfolgenden kritischen Phasenanpassung anstelle eines doppelbrechenden optischen Elementes 14 ein optisch isotropes dispersives optisches Element verwendet werden.

In den Ausführungsbeispielen gemäß Fig. 1 bis 3 sind die Seitenflächen 17 des zweiten Kristalls 10 parallel zur Ausbreitungsrichtung des ersten und zweiten Laserstrahls 6, 8 im ersten Kristall 2 orientiert und dementsprechend schematisch und idealisiert eine Situation dargestellt, bei der die Keilwinkel β und γ sowie die Brechungsindizes des optischen Elementes 14 und des zweiten Kristalles 10 so aufeinander abgestimmt sind, dass die Wellenvektoren k₁ und k₂ des ersten und zweiten Laserstrahles 6 bzw. 8 im zweiten Kristall 10 außerdem parallel zur Ausbreitungsrichtung bzw. zu den Wellenvektoren k₁ und k₂ des ersten und zweiten Laserstrahles 6 bzw. 8 im ersten Kristall 2 orientiert sind.

In Fig. 4 ist eine Ausführungsform dargestellt, bei der abweichend von den in Fig. 1 bis 3 dargestellten Ausführungsformen die Seitenflächen 17 schräg zur Ausbreitungsrichtung des ersten und zweiten Laserstrahls 6, 8 im ersten Kristall 2 orientiert sind. Die schräge Orientierung der Seitenflächen 17 gemäß Fig. 4 ist notwendig, wenn sich die Brechungsindizes des optischen Elementes 14 und die Brechungsindizes des zweiten Kristalls 10 unterscheiden, was in der Praxis die Regel ist, wenn üblicherweise verwendete Werkstoffe für das optische Element 14 zum Einsatz gelangen. In diesem Fall ist eine Kollinearität der Wellenvektoren k₁ und k₂ nur möglich, wenn diese und dementsprechend die Seitenflächen 17 des zweiten Kristalls 10 unter einem von Null verschiedenen Winkel zur Ausbreitungsrichtung k₀ orientiert sind. Im dargestellten Beispiel ergeben sich bei Verwendung von Quarzglas als optisches Element 14 (Brechungsindex n=1,449 für λ=1064nm und n=1,460 für λ=532nm) mit einem Keilwinkel β=12,56°, LBO (60°) als zweiten Kristall 10 (Brechungsindex n=1,565 für λ=1064nm und n=1,613 für λ=532nm) mit einer Länge L=18mm und einem Keilwinkel γ=3° und der Bedingung, dass sich erster und zweiter Laserstrahl 6, 8 in der Mitte des zweiten Kristalls 10 ("walk-off"-Winkel δ=9,54mrad) als erforderliche Strahlseparation a=85,8µm und als Abstand d=34,2mm. Die Ausbreitungsrichtung des ersten Laserstrahls 6 innerhalb des zweiten Kristalls 10 verläuft dann unter einem spitzen Winkel σ=3,95° zur Ausbreitungsrichtung innerhalb des ersten Kristalls 2.

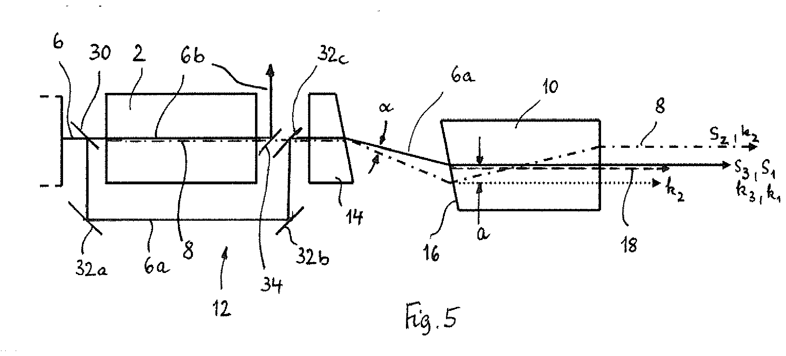

Eine alternative Möglichkeit die relative Strahllage zwischen erstem und zweitem Laserstrahl derart einzustellen, dass sich erster und zweiter Laserstrahl vor dem Eintritt in den zweiten Kristall 10 unter einem von Null verschiedenen Winkel zueinander ausbreiten und sich innerhalb des zweiten Kristalles bei zugleich kollinearer Phasenanpassung schneiden, ist in Fig. 5 dargestellt. In diesem Ausführungsbeispiel umfasst die Ablenkeinrichtung 12 einen Strahlteiler 30, im Beispiel veranschaulicht mit einem teildurchlässigen Spiegel, der einen Teil 6a des von der Laserstrahlquelle 4 erzeugten ersten Laserstrahls 6 auskoppelt und über eine Strahlführungseinrichtung, im Beispiel durch Umlenkspiegel 32a-c veranschaulicht, am ersten Kristall 2 vorbeigeleitet und zwischen diesem und dem optischen Element 14 erneut dem im ersten Kristall 2 erzeugten zweiten Laserstrahl 8 überlagert wird. Der andere Teil 6b wird in den ersten Kristall 2 zur Erzeugung der zweiten Harmonischen eingekoppelt und nach Verlassen des ersten Kristalls 2 mit einem nur für den zweiten Laserstrahl 8 durchlässigen dichroitischen Spiegel 34 ausgekoppelt. Auch in diesem Fall sind der Winkel α, die Strahlseparation a und die Orientierung der Eintrittsfläche 16 des zweiten Kristalls 10 so aufeinander abgestimmt, dass sich erster und zweiter Laserstrahl 6, 8 innerhalb des zweiten Kristalls 10 schneiden. Bei einer solchen Anordnung ist die Verwendung eines in der Fig. 5 als Keilprisma dargestellten optischen Elementes 14 grundsätzlich nicht mehr erforderlich, da der Winkel zwischen den sich vor dem zweiten Kristall 10 ausbreitenden ersten und zweiten Laserstrahlen 6, 8 über eine externe Strahlführungseinrichtung beliebig eingestellt werden kann. Darüber hinaus kann die in der Fig. 5 dargestellte Strahlteilung und Strahlablenkung auch mit faseroptischen Elementen durchgeführt werden.

Die Einrichtung gemäß der Erfindung kann grundsätzlich auch mit anderen Lasertypen, beispielsweise mit einem Faser- oder Gaslaser realisiert werden. Darüber hinaus können auch andere laseraktive Materialien zum Einsatz gelangen, beispielsweise ohne abschließende Aufzählung Nd:YVO, Yb:YAG. Ebenso ist die Verwendung anderer nichtlinearer Kristalle möglich, beispielsweise ebenfalls ohne abschließende Aufzählung BBO, KTP, CLBO oder BiBO. Ebenso kann das dispersive Element 14 auch aus anderen Materialien, beispielsweise Borosilikatglas BK7 bestehen. Bei dem Laser 4 kann es sich um einen CW-Laser, einen modengekoppelten Laser oder einen gepulst betriebenen, beispielsweise gütegeschalteten Laser handeln.

Eine Einrichtung gemäß der Erfindung ist außerdem nicht auf eine Erzeugung der dritten Harmonischen beschränkt, sondern kann auch bei anderen nichtlinearen optischen Prozessen Anwendung finden, bei denen zur Erzeugung eines dritten Laserstrahls die Kompensation eines "walk-off" zwischen einem ersten und einem zweiten Laserstrahl erforderlich ist.

## Patentansprüche

1. Einrichtung zur Frequenzumwandlung eines mit einer ersten Frequenz (ω₁) von einer Laserstrahlquelle (4) erzeugten ersten Laserstrahls (6) mit:
a) einem optisch nichtlinearen ersten Kristall (2) zum Erzeugen eines zweiten Laserstrahls (8) mit einer von der ersten Frequenz (ω₁) verschiedenen zweiten Frequenz (ω₂), der sich nach Verlassen des ersten optisch nichtlinearen Kristalls (2) parallel zum ersten Laserstrahl (6) ausbreitet,
b) einem optisch nichtlinearen zweiten Kristall (10), der aus dem ersten und zweiten Laserstrahl (6,8) zumindest einen dritten Laserstrahl (18) mit einer dritten, von der ersten Frequenz (ω₁) und der zweiten Frequenz (ω₂) verschiedenen dritten Frequenz (ω₃) erzeugt,
c) einer optischen Ablenkeinrichtung (12) zur Beeinflussung der relativen Strahllage zwischen erstem und zweitem Laserstrahl (6,8) derart, dass sich
d) erster und zweiter Laserstrahl (6,8) vor dem Eintritt in den zweiten Kristall (10) unter einem von Null verschiedenen Winkel (α) zueinander ausbreiten und
e) voneinander beabstandet an einer Eintrittsfläche (16) des zweiten Kristalls (10) eintreten, **dadurch gekennzeichnet dass** erster und zweiter Laserstrahl (6,8) sich innerhalb des zweiten Kristalles (10) bei zugleich kollinearer Phasenanpassung schneiden, wobei
f) die Eintrittsfläche (16) des zweiten Kristalls (10) unter einem von 0° verschiedenen Keilwinkel (γ) zu zwei zueinander parallelen, einander gegenüber liegenden Seitenflächen (17) des zweiten Kristalls (10) geneigt ist.

2. Einrichtung nach Anspruch 1, bei der der zweite Kristall (10) derart orientiert ist, dass sich der erste Laserstrahl (6) innerhalb des zweiten Kristalls (10) parallel zu dessen Seitenflächen (17) ausbreitet.

3. Einrichtung nach Anspruch 1 oder 2, bei der die optische Ablenkeinrichtung ein zwischen dem ersten und zweiten nichtlinearen Kristall im Strahlengang des ersten und zweiten Laserstrahls angeordnetes optisches Element ist.

4. Einrichtung nach Anspruch 3, bei der das optische Element ein dispersives optisches Element ist.

5. Einrichtung nach Anspruch 4, bei der das optische Element optisch isotrop ist.

6. Einrichtung nach Anspruch 3, bei der das optische Element ein Beugungsgitter ist und die Ablenkung durch Beugung erfolgt.

## Claims

1. Device for frequency conversion of a first laser beam (6) generated at a first frequency (ω₁) by a laser beam source (4), said device having:
a) an optically nonlinear first crystal (2) for generating a second laser beam (8) at a second frequency (ω₂) which is different from the first frequency (ω₁), said laser beam propagating parallel to the first laser beam (6) after leaving the first optically nonlinear crystal (2),
b) an optically nonlinear second crystal (10) which generates at least one third laser beam (18) from the first and second laser beam (6, 8) at a third frequency (ω₃) which is different from the first frequency (ω₁) and the second frequency (ω₂),
c) an optical deflection device (12) for influencing the relative beam position between the first and second laser beam (6, 8) in such a way that
d) the first and second laser beam (6, 8) propagate at an angle (α) different from zero relative to each other before entry into the second crystal (10) and
e) they enter spaced apart from each other at an entry surface (16) of the second crystal (10), **characterised in that** the first and second laser beam (6, 8) intersect within the second crystal (10) during simultaneous collinear phase matching, wherein
f) the entry surface (16) of the second crystal (10) is inclined at a wedge angle (γ) different from 0° with respect to two side surfaces (17) of the second crystal (10) which are parallel to each other and opposite each other.

2. Device according to claim 1, in which the second crystal (10) is oriented in such a way that the first laser beam (6) propagates within the second crystal (10) parallel to the side surfaces (17) thereof.

3. Device according to claim 1 or 2, in which the optical deflection device is an optical element which is arranged between the first and second nonlinear crystal in the beam path of the first and second laser beam.

4. Device according to claim 3 in which the optical element is a dispersive optical element.

5. Device according to claim 4 in which the optical element is optically isotropic.

6. Device according to claim 3 in which the optical element is a diffraction grating and the deflection is effected by diffraction.

## Revendications

1. Dispositif de transformation de la fréquence, d'un premier rayon (6) laser produit à une première fréquence (ω₁), par une première source (4) de rayonnement laser, comprenant :
a) un premier cristal (2), non linéaire optiquement, de production d'un deuxième rayon (8) laser, ayant une deuxième fréquence (ω₂), différente de la première fréquence (ω₁), qui se propage, après avoir quitté le premier cristal (2) non linéaire optiquement, parallèlement au premier rayon (6) laser,
b) un deuxième cristal (10), non linéaire optiquement, qui produit, à partir du premier et du deuxième rayons (6, 8) laser au moins un troisième rayon (18) laser, ayant une troisième fréquence (ω₃), différente de la première fréquence (ω₁) et de la deuxième fréquence (ω₂) ,
c) une dispositif (12) de déviation optique, pour influencer la position relative entre le premier et le deuxième rayons (6, 8) laser, de manière à ce que
d) le premier et le deuxième rayons (6, 8) laser se propagent, avant l'entrée dans le deuxième cristal (10), en faisant entre eux un angle (α), différent de zéro et
e) entrent, en étant à distance l'un de l'autre, sur une surface (16) d'entrée du deuxième cristal (10), **caractérisé en ce que** le premier et le deuxième rayons (6, 8) laser se coupent au sein du deuxième cristal (10), en ayant en même temps une adaptation de phase colinéaire, dans lequel
f) la surface (16) d'entrée du deuxième cristal (10) est inclinée d'un angle (γ) de coin, différent de 0°, par rapport à deux surfaces (17) latérales, parallèles entre elles et opposées l'une à l'autre, du deuxième cristal (10).

2. Dispositif suivant la revendication 1, dans lequel le deuxième cristal (10) est orienté, de manière à ce que le premier rayon (6) laser se propage au sein du deuxième cristal (10) parallèlement à ses surfaces (17) latérales.

3. Dispositif suivant la revendication 1 ou 2, dans lequel le dispositif de déviation optique est un élément optique disposé, entre le premier et le deuxième cristal non linéaire, dans le trajet du premier et du deuxième rayons laser.

4. Dispositif suivant la revendication 3, dans lequel l'élément optique est un élément optique dispersif.

5. Dispositif suivant la revendication 4, dans lequel l'élément optique est isotrope optiquement.

6. Dispositif suivant la revendication 3, dans lequel l'élément optique est un réseau de diffraction et la déviation s'effectue par diffraction.
